# FASCICULE DE BREVET EUROPEEN

(11) **EP 0 463 384 B1**
(45) Date de publication et mention de la délivrance du brevet: **13.03.1996**
(21) Numéro de dépôt: 91108556.1
(22) Date de dépôt: 27.05.1991
(51) Int. Cl.: H04Q 7/20, H04Q 7/38

(54) **Procédé d'accès à un service de téléphonie sans fil**
Zugriffsverfahren für schnurlosen Telefondienst
Method of access to a cordless telephone service

(30) Priorité: 30.05.1990 FR 9006705
(43) Date de publication de la demande: 02.01.1992
(73) Titulaire: ALCATEL CIT, F-75008 Paris (FR)
(72) Inventeur: Kerihuel, Jean-Bernard, F-75015 Paris (FR); Martin, Maurice, F-75013 Paris (FR)
(74) Mandataire: Weinmiller, Jürgen

(56) Documents cités:
- EP-A- 0 264 023
- EP-A- 0 367 361
- EP-A- 0 410 251
- ELECTRICAL COMMUNICATION vol. 63, no. 4, 1989, BRUSSELS (BE) pages 389 - 399; M. BALLARD ET AL: 'Cellular Mobile Radio as an Intelligent Network Application
- ELECTRICAL COMMUNICATION vol. 63, no. 4, 1989, BRUSSELS (BE) pages 400 - 408; W. WEISS ET AL: 'System 900: the ISDN Approach to Cellular Mobile Radio '
- SUPPLEMENT TO BRITISH TELECOMMUNICATIONS ENGINEERING. vol. 8, Juillet 1989, LONDON GB pages 14 - 19; G. ALTEHAGE: 'Open Network Provision: Concepts and Technical Realisation Proposals for the Network of the Deutsche Bundespost Telekom '
- COMMUTATION ET TRANSMISSION no. 2, 1989, PARIS (FR) pages 5 - 22; J. DUNOGUE ET AL: 'DU CONCEPT A L'APPLICATION DU RESEAU INTELLIGENT Architecture et équipe ments d'Alcatel '

## Description

L'invention concerne un procédé d'accès à un service de téléphonie sans fil, ce service étant assuré par un réseau comportant essentiellement : des stations fixes; des téléphones numériques sans fil, reliés par radio aux stations fixes; et un réseau public commuté, numérique, à intégration de services. L'invention concerne plus particulièrement un service de téléphonie sans fil assuré par un réseau "intelligent", qui sera décrit plus loin.

Un procédé d'accès à un service de téléphonie sans fil a classiquement deux fonctions : vérifier que le demandeur a le droit d'utiliser le téléphone qu'il a entre les mains; et vérifier que ce téléphone correspond à un abonnement valide donnant le droit d'utiliser le service de téléphonie sans fil. Pour la première vérification, le demandeur tape, sur le clavier de son téléphone, un code confidentiel. Une comparaison avec le même code, mémorisé à l'intérieur du téléphone, permet de déverrouiller ce dernier. La seconde vérification, qui est appelée authentification du demandeur, est plus difficile à réaliser car les caractéristiques des abonnements de l'ensemble des abonnés au service constituent une grosse quantité d'informations et ces informations changent fréquemment. En particulier, un abonnement est invalidé lorsqu'un téléphone est perdu ou volé.

Selon un procédé connu d'accès à un service de téléphonie sans fil, l'authentification du demandeur consiste à transmettre, de son téléphone vers la station fixe, un numéro identifiant l'abonnement souscrit par le titulaire du téléphone. Chaque station fixe est équipée de ses propres moyens d'authentification, qui comportent une liste noire, répertoriant les abonnements invalidés. Chaque station fixe est reliée, au réseau public commuté, seulement par des voies téléphoniques. Pour mettre à jour périodiquement la liste noire, des données sont transmises sur ces voies téléphoniques, aux heures creuses, au moyen d'un modem.

Ce procédé d'authentification n'est pas très sûr, parce que la liste noire n'est mise à jour que journellement, dans le meilleur des cas; et parce que le numéro d'abonnement peut être intercepté par un tiers au cours de la transmission radio.

En outre, le procédé connu ne permet pas de proposer différents types d'abonnements comportant une autorisation ou un refus d'accès en fonction du numéro demandé, ou en fonction du débit du compte de taxation de l'abonné. Il ne permet pas, non plus, de transmettre au téléphone du demandeur un message indiquant le débit de son compte, sur un afficheur incorporé au téléphone. Ce sont deux inconvénients sérieux pour la location de téléphones sans fil, puisque le loueur ne peut pas restreindre les droits conférés par un abonnement, pour se garantir contre les impayés, en interdisant certains numéros ou en plafonnant le débit du compte des abonnés; et puisqu'il est difficilement envisageable de plafonner le débit du compte d'un locataire, sans que celui-ci soit informé de l'état de son compte préalablement à chaque appel.

Le but de l'invention est de proposer un procédé d'accès qui soit plus résistant à la fraude et qui permette en outre : d'autoriser ou non certains numéros; d'envoyer au téléphone du demandeur un message indiquant le débit de son compte; et d'autoriser ou non un appel en fonction de l'état du compte de l'abonné. Ce but est atteint en donnant au réseau de téléphonie sans fil une structure de réseau intelligent, et en donnant au procédé d'accès les caractéristiques suivantes.

Selon l'invention, un procédé d'accès à un service de téléphonie sans fil, ce service étant assuré par un réseau comportant :
- un réseau de distribution constitué par des stations fixes et des téléphones numériques, sans fil, reliés par radio aux stations fixes;
- un réseau public commuté, numérique, à intégration de services, chaque station fixe lui étant reliée notamment par un canal de signalisation d'usager à usager;
- des points de commande de service réseau reliés au réseau commuté, et comportant chacun une base de données d'abonnés au service de téléphonie sans fil, et un dispositif logique de traitement d'appels;
- un point de commande de service gestion comportant une base de données de référence; un tel procédé est déjà connu de l'article Ballard M. et al.: 'Cellular Mobile Radio as an Intelligent Network Application', Electrical Communication, Vol. 63, No. 4, 1989, pp. 389-399
   est caractérisé en ce qu'il consiste à échanger des informations entre une station fixe et un point de commande de service, en vue de déterminer le droit d'accès d'un demandeur, par le canal de signalisation d'usager à usager de l'accès normalisé reliant la station fixe au réseau public commuté.

Le procédé d'accès ainsi caractérisé permet d'autoriser l'accès à partir d'informations fiables car mise à jour en temps réel dans les points de commande de service du réseau public à intégration de services. D'autre part, le canal de signalisation d'usager à usager a un débit suffisant pour des échanges d'informations en vue de déterminer le droit d'accès d'un demandeur, sans entraîner de coût supplémentaire puisqu'il est systèmatiquement présent dans chaque accès normalisé au réseau public numérique à intégration de services.

Selon une autre caractéristique, pour authentifier un demandeur le procédé selon l'invention consiste à :
- stocker et tenir à jour, dans les bases de données des points de commande de service, des mots identifiant chaque abonnement et le téléphone correspondant, et une clé secrète associée à cet abonnement, et propre à un abonné;
- transmettre du téléphone du demandeur, au point de commande de service réseau desservant ce demandeur, par le canal de signalisation d'usager à usager, des mots identifiant l'abonnement et le téléphone du demandeur;
- déterminer, dans le téléphone du demandeur, une première signature en fonction la clé secrète, propre au demandeur, et d'un nombre aléatoire, par un algorithme prédéterminé;
- transmettre la première signature au dit point de commande de service réseau, par le canal de signalisation d'usager à usager;
- déterminer dans ledit point de commande de service réseau, une seconde signature en fonction de la clé secrète associée à l'abonnement du demandeur, et en fonction du dit nombre aléatoire, par ledit algorithme prédéterminé;
- vérifier, dans ledit point de commande de service réseau, que :
   -- la première et la seconde signature sont identiques;
   -- que le mot identifiant l'abonnement du demandeur correspond à un abonnement valide;
   -- que le mot identifiant l'abonnement du demandeur correspond au mot identifiant le téléphone du demandeur.

Le procédé d'accès ainsi caractérisé procure une grande fiabilité d'authentification du demandeur car il n'y a pas de transmission de données secrètes entre le téléphone et le point de commande de service réseau, ce qui permet d'éviter toute fraude consistant à intercepter des données d'authentification. D'autre part, tout abonnement peut être invalidé avec un effet pratiquement instantané, car la centralisation des données permet la mise à jour en temps réel des bases des données des points de commande de service.

Selon une autre caractéristique, pour autoriser l'accès à un numéro demandé, en fonction des numéros autorisés par l'abonnement du demandeur, le procédé selon l'invention consiste en outre, à stocker et tenir à jour, dans les bases de données des points de commande, pour chaque abonnement, les caractéristiques des numéros qui sont autorisés par cet abonnement; et consiste, lors de chaque demande d'accès, à :
- vérifier si le numéro demandé est un numéro d'urgence;
- vérifier si le numéro demandé est autorisé par l'abonnement du demandeur, dans le cas où ce n'est pas un numéro d'urgence.

Le procédé ainsi caractérisé permet de proposer au public différents types d'abonnement, en interdisant l'accès au service de téléphonie sans fil lorsque le numéro demandé ne correspond pas au type d'abonnement souscrit.

Selon une autre caractéristique, le procédé selon l'invention consiste en outre à :
- stocker et tenir à jour, dans les bases de données des points de commande de service pour chaque abonnement, l'état du compte de taxation téléphonique de cet abonnement;
- vérifier, dans ledit point de commande de service réseau, que le débit du compte du demandeur n'a pas atteint le plafond, dans le cas où le numéro demandé n'est pas un numéro d'urgence.

Le procédé ainsi caractérisé permet à l'exploitant du service de proposer au public plusieurs types d'abonnement correspondant à différentes valeurs du plafond de débit, la valeur du plafond étant éventuellement payée à l'avance par l'abonné.

Selon une autre caractéristique, il consiste, en outre, à:
- envoyer, du point de commande de service réseau desservant le demandeur, vers le téléphone du demandeur, un message indiquant l'état du compte de taxation téléphonique de son abonnement, au moment où il demande à accèder au service;
- afficher cet état sur un afficheur intégré au téléphone du demandeur.

Le procédé ainsi caractérisé permet d'avertir l'abonné de ses possibilités de débit sur son compte de taxation, pour qu'il ne soit pas privé de l'usage de son téléphone intempestivement.

Deux variantes de mise en oeuvre du procédé selon l'invention, concernant la façon de déterminer un nombre aléatoire pour l'authentification, sont caractérisées dans les revendications 6 et 7 respectivement.

L'invention sera mieux comprise et d'autres détails apparaîtront à l'aide de la description ci-dessous et des figures l'accompagnant :
- la figure 1 représente le schéma synoptique d'un exemple de réseau intelligent assurant un service de téléphonie sans fil, en mettant en oeuvre le procédé d'accès, selon l'invention;
- la figure 2 représente un diagramme temporel illustrant un exemple de mise en oeuvre du procédé selon l'invention;
- la figure 3 représente un autre diagramme temporel illustrant une variante de cet exemple de mise en oeuvre.

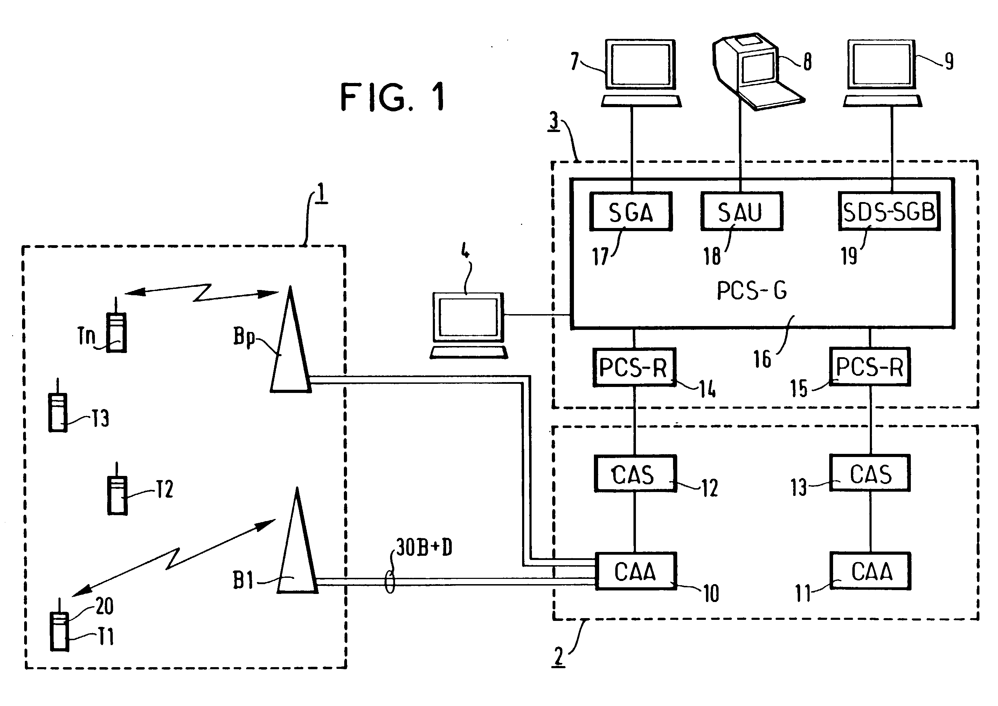

la figure 1 représente le schéma synoptique d'un exemple de réseau intelligent de téléphonie sans fil, permettant la mise en oeuvre du procédé selon l'invention. Il comporte : un réseau de distribution 1; un réseau public commuté 2, numérique, à intégration de services ; un réseau de points de commande de service, 3; et des unités d'exploitation 4, 7, 8, 9.

Le réseau de distribution 1 comprend des téléphones numériques portatifs, sans fil, T1,...,Tn, et des stations fixes B1,...,Bp. Dans cet exemple, chaque téléphone mobile est astreint à rester près d'une même station fixe pendant toute la durée d'une communication, mais l'invention est applicable aussi à un réseau permettant le transfert d'une communication d'une station fixe à une autre station fixe voisine pour permettre un déplacement des téléphones mobiles en cours de communication.

Dans cet exemple de réalisation, chaque téléphone T1,...,Tn comporte un afficheur alphanumérique 20. Chaque téléphone peut être relié par radio à une station fixe située à proximité de ce téléphone, chaque station fixe pouvant desservir simultanément plusieurs téléphones. Chaque station fixe B1,...,Bp est reliée, par des accès normalisés, au réseau public commuté 2. Chaque accès au réseau 2 est un accès normalisé qui comporte un canal de signalisation d'usager à usager, noté D, et plusieurs canaux téléphoniques, notés B. Le nombre de canaux téléphoniques peut être égal à deux pour un accès de base et à trente pour un accès primaire. Ces canaux téléphoniques sont bidirectionnels et sont établis en mode circuit. Le canal de signalisation d'usager à usager est un canal bidirectionnel exploité en mode message. Il permet de transmettre des données parallèlement aux conversations téléphoniques. L'une de ses applications classiques consiste à transmettre le numéro de téléphone ou le nom du demandeur jusqu'à un afficheur situé sur le terminal téléphonique de la personne demandée.

Le réseau public commuté 2, est constitué de centres à autonomie d'acheminement (CAA) et de commutateurs d'accès au service (CAS). Cet exemple de réseau comporte deux centres à autonomie d'acheminement, 10 et 11, reliés respectivement à deux centres d'accès au service, 12 et 13, par des liaisons conformes au protocole n^{°} 7 du CCITT. Dans cet exemple, les stations fixes B1,...,Bp sont reliées au centre à autonomie d'acheminement 10.

Le réseau 3 de points de commande de service comporte, dans cet exemple, deux points de commande de service réseau (PCS-R) 14 et 15; un point de commande de service gestion (PCS-G) 16. Les points de commande de service réseau 14 et 15 sont reliés respectivement aux centres d'accès au service, 12 et 13, par des liaisons conformes au protocole n^{°}7 du CCITT; et sont reliés au point de commande de service gestion 16 par des liaisons conformes au protocole X25 du CCITT.

Chaque unité d'exploitation 4, 7, 8, 9 est constituée essentiellement d'un terminal écran-clavier. Les terminaux sont affectés à différentes équipes d'exploitation, le point de commande de service gestion 16 fournissant à chaque équipe les informations et les moyens de dialogue. Le terminal 4 est affecté à l'exploitant technique du réseau intelligent. Le terminal 9 est un terminal ASCII ou vidéotex affecté à un exploitant technique de l'ensemble des stations fixes ou d'un parc de stations fixes particulier. Il accède à la base de données du point de commande de service gestion 16, par un serveur de gestion de stations fixes (SGB) et par un serveur de statistiques (SDS), 19. Le terminal 8 est optionnel, c'est un terminal vidéotex permettant à un abonné de consulter des données de son service : données d'abonnement et tickets de facturation. Il accède au point de commande de service gestion 16 par un serveur d'accès d'usagers (SAU) 18. Le terminal 7 est un terminal vidéotex affecté à l'exploitant commercial du service de téléphonie sans fil. Il accède au point de commande de service gestion 16 par un serveur de gestion d'abonnés (SGA) 17 qui est relié aussi au système de gestion des abonnés 6.

Chaque station fixe B1,...,Bp comporte un contrôleur qui supervise des interfaces de raccordement : aux canaux téléphoniques B, au canal de signalisation D; et aux canaux radio. Le contrôleur assure les fonctions suivantes :
- initialisation d'un appel vers le réseau lors de la prise d'un canal radio par un téléphone T1,...,Tn;
- participation à la procédure d'authentification d'un demandeur;
- analyse des informations reçues sur les canaux radio;
- supervision des canaux radio;
- réalisation d'une procédure d'auto-test interne pour la maintenance de la station fixe;
- réalisation de téléchargements pour modifier le logiciel de la station fixe;
- observations (comptages et statistiques);
- synchronisation des canaux radio;

Un appel d'un utilisateur du réseau public 2, pour un service, est analysé dans l'un des commutateurs d'accès au service 12 ou 13, puis est transmis au point de commande de service réseau, 14 ou 15, desservant ce commutateur. Ce point de commande de service réseau pilote alors l'ensemble du traitement d'appel et commande le commutateur d'accès au service pour toutes les actions nécessitant des ressources de commutation. Par exemple : pour l'envoi d'une annonce vocale, ou pour établir une connexion entre une entrée du réseau et une sortie du réseau, ou pour réaliser une temporisation. Pour traiter chaque appel, un point de commande de service réseau dispose d'un logiciel pour chaque service, organisé sous forme d'enchaînement d'actions élémentaires, en fonction de messages reçus. Il dispose en outre d'une base de données accessible en temps réel.

Le point de commande de service gestion 16 n'est pas concerné par le traitement d'appels. Par contre, il constitue une référence pour le service car il comporte une base de données contenant les logiciels du service et contenant les données concernant les abonnés. Il assure l'exploitation technique du réseau de points de commande de service réseau, 14 et 15, notamment en maintenant la cohérence des bases de données; et il assure l'exploitation commerciale du service : gestion des contrats, accès de l'exploitant, accès des abonnés.

Les points de commande 14 à 16 peuvent être constitués par exemple d'un multiprocesseurs ALCATEL8300, commercialisé par la société ALCATEL.

Les points de commande de service réseau, 14 et 15, sont utilisés pour mettre en oeuvre le procédé d'accès au service de téléphonie sans fil. Chacun comporte une base de données d'abonnés au service de téléphonie sans fil. Cette base contient des données correspondant à une partie des abonnés ou à tous les abonnés au service. La mise à jour de cette base de données est faite par le point de commande de service gestion 16, simultanément dans toutes les bases de données des points de commande de service réseau, 14 et 15, dès que le point de commande de service gestion 16 est informé d'une modification relative aux abonnés, par l'intermédiaire de l'un des centres d'exploitation 4, 7, 8, 9.

La base de données des points de commande de service, 14, 15, et 16, contient pour un abonné, notamment :
- un mot IDAB désignant l'abonnement;
- un mot IDCP désignant le téléphone dont l'abonné est titulaire;
- une clé secrète Ki propre à cet abonné;
- un mot IDSO désignant le service et l'opérateur du service objet de l'abonnement;
- le type d'abonnement : international, autorisant tous les appels; ou national, autorisant les appels dans un seul pays; ou sélection, autorisant une liste de numéros prédéterminés;
- les numéros dont l'accès est autorisé à cet abonné, si c'est un abonnement du type sélection;
- le plafond du débit de son compte;
- la date de fin de validité de l'abonnement.

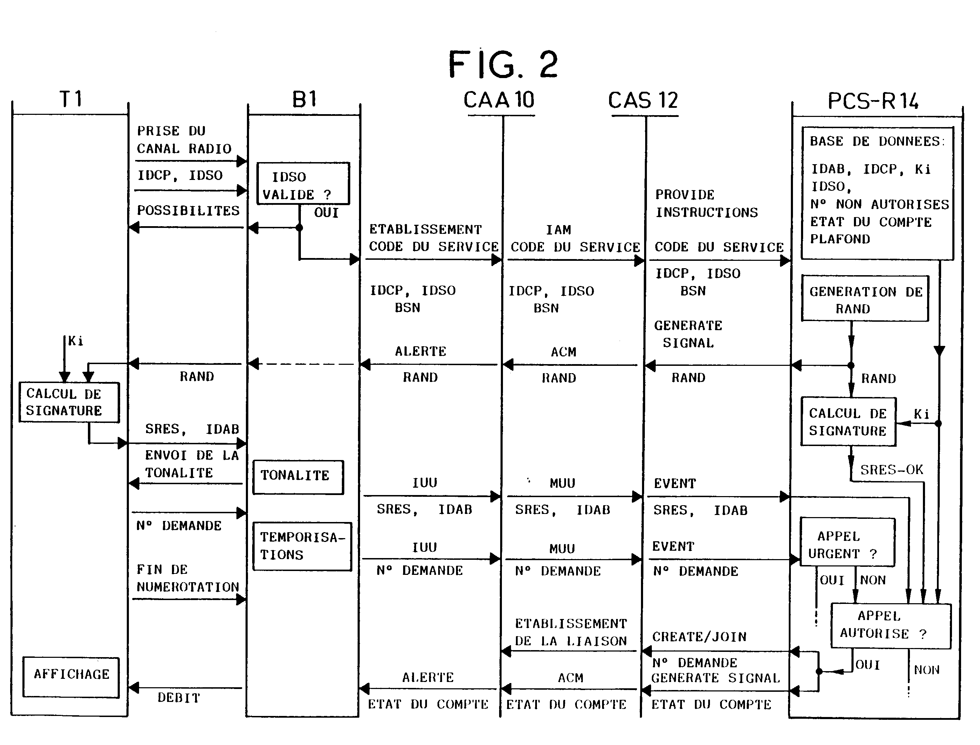

La figure 2 représente un diagramme temporel qui indique les échanges d'informations au cours de l'accès d'un demandeur au service de téléphonie sans fil. Le temps s'écoule du haut en bas de la figure. D'abord, le demandeur déverrouille son téléphone T1, en tapant son code confidentiel sur le clavier du téléphone. La vérification est faite par le poste lui-même. Le déverrouillage est suivi de la prise d'un canal radio d'une station fixe B1 située à proximité du téléphone T1, selon une procédure classique, normalisée.

Le téléphone T1 transmet alors deux mots, IDCP et IDSO, vers la station fixe B1. Le mot IDSO désigne le service de téléphonie sans fil et son opérateur, le mot IDCP désigne le téléphone T1. La station fixe B1 vérifie que le mot IDSO désigne un opérateur connu, puis envoie au téléphone T1 un message indiquant que l'accès au service demandé est possible.

Simultanément, la station fixe B1 envoie au centre à autonomie d'acheminement 10, un message noté ETABLISSEMENT, conforme au protocole n^{°}7, et qui contient notamment un champ réservé à la signalisation d'usager à usager. Ce champ contient : un mot de code désignant le service demandé, c'est-à-dire le service de téléphonie sans fil; les mots IDCP et IDSO; et un mot BSN qui est un numéro désignant la station fixe B1. Le centre à autonomie d'acheminement 10 envoie un message IAM, contenant les mêmes mots, au centre d'accès au service 12. Ce dernier envoie au point de commande de service réseau 14 un message noté PROVIDE INSTRUCTIONS, contenant les mêmes mots.

Le point de commande de service réseau 14 produit alors un nombre aléatoire noté RAND et l'envoie au centre d'accès au service, 12 dans un message noté GENERATE SIGNAL, dans le champ réservé à la signalisation d'usager à usager. Le centre d'accès au service 12 envoie un message, noté ACM, au centre à autonomie d'acheminement 10, ce message contenant le nombre aléatoire RAND. Le centre à autonomie d'acheminement 10 retransmet à la station fixe B1 le nombre aléatoire RAND dans un message noté ALERTE. La station fixe B1 retransmet le nombre aléatoire RAND au téléphone T1 qui l'utilise pour calculer une signature SRES en fonction d'une clé secrète Ki qui est contenue dans le téléphone T1 et qui est propre à un abonné seulement. Le calcul de signature est réalisé au moyen d'un algorithme cryptologique classique.

La clé Ki est contenue dans un module inviolable qui est enfiché dans le téléphone T1 et qui sert à personnaliser ce téléphone T1 pour un abonné déterminé. Ce module contient en outre le mot IDAB qui désigne l'abonnement indépendamment du mot IDCP qui désigne le téléphone T1 sur lequel est enfiché le module. Le téléphone T1 envoie à la station fixe B1 le mot SRES constituant sa signature, et le mot IDAB. La station fixe B1 envoie alors au téléphone T1 une tonalité invitant le demandeur à composer le numéro demandé.

La station fixe B1 transmet les mots SRES et IDAB au centre à autonomie d'acheminement 10, dans un message noté IUU. Le centre à autonomie d'acheminement 10 les retransmet au centre d'accès au service 12 dans un message noté MUU. Le centre d'accès au service 12 les retransmet au point de commande de service réseau 14 dans un message noté EVENT.

Le demandeur compose le numéro demandé. La station fixe B1 réalise les temporisations classiques entre les chiffres du numéro. Le demandeur termine la composition du numéro par un signal de fin de numérotation qui déclenche l'envoi du numéro demandé, de la station fixe B1 au centre à autonomie d'acheminement 10, dans un message noté IUU. Le centre à autonomie d'acheminement 10 retransmet le numéro demandé au centre d'accès au service 12, dans un message MUU. Le centre d'accès au service 12 retransmet le numéro demandé au point de commande de service réseau 14, dans un message noté EVENT.

Si le numéro demandé correspond à un appel urgent (pompier, police, service médical d'urgence), l'appel est autorisé sans faire d'authentication. La suite du procédé correspondant à ce cas n'est pas représentée sur la figure, pour plus de clarté. Le point de commande de service gestion 16 élabore immédiatement un ticket d'appel; envoit un ordre d'établissement au centre d'accès au service 12; puis relâche l'appel. La station service B1 prend alors en charge l'acheminement de l'appel vers le centre à autonomie d'acheminement 10. L'appel est ainsi acheminé en fonction de la position géographique de la station fixe qui a reçu l'appel.

Si le numéro ne correspond pas à un appel urgent, le point de commande de service réseau 14 doit authentifier le demandeur et vérifier qu'il est autorisé à accéder au numéro demandé.

Le point de commande de service réseau 14 détermine une signature de référence notée SRES-OK, en fonction du nombre aléatoire RAND et en fonction de la clé secrète Ki correspondant à l'abonnement désigné par IDAB, cette clé étant lue dans sa base de données. L'algorithme utilisé est le même que celui utilisé dans le téléphone T1. Il dépend de l'opérateur du service. Il est connu à partir du mot IDSO envoyé par le téléphone T1.

Le point de commande de service réseau 14 effectue plusieurs vérifications entre ce qu'il reçoit du réseau et le contenu de sa base de données. Il vérifie que la signature SRES est identique à la signature de référence SRES-OK, pour détecter tout fraudeur qui utiliserait les mots IDAB et IDCP d'un abonné, après les avoir interceptés. Il vérifie que le mot IDAB identifiant l'abonnement, correspond à un abonnement valide. Il vérifie que IDAB correspond au mot IDCP identifiant le téléphone T1, pour détecter éventuellement un téléphone volé.

Le point de commande de service réseau 14 vérifie en outre que le numéro demandé est autorisé pour ce demandeur, en comparant le numéro demandé, aux caractéristiques des numéros autorisés, stockées dans la base de données, parmi les données concernant cet abonné.

Enfin, il vérifie que l'état du compte de taxation du demandeur n'a pas atteint le plafond fixé par l'abonnement. Pour permettre cette fonction, la base de données du point de commande de service réseau 14 contient le montant du débit de taxation de cet abonné, mis à jour en temps réel par le point de commande de service gestion 16.

Si l'une des vérifications est négative, l'accès est refusé. La suite du procédé correspondant à ce cas n'est pas représentée sur la figure pour plus de clarté. Le point de commande service réseau 14 donne l'ordre au centre à autonomie d'acheminement 10, de signifier ce refus au demandeur, par une tonalité ou par une annonce vocale. Il met éventuellement l'abonnement en opposition, après un nombre fixé d'accès refusés au même demandeur, puis il commande un relâchement de la liaison.

Si toutes les vérifications sont positives, le point de commande de service réseau 14 envoie au centre d'accès au service, 12, un message noté CREATE/JOIN qui contient le numéro demandé. Le centre d'accès au service 12 envoie un ordre d'établissement de la liaison correspondant à ce numéro, au centre à autonomie d'acheminement 10.

Dans cet exemple de mise en oeuvre, le point de commande de service réseau 16 réalise une opération supplémentaire consistant à envoyer, au téléphone T1 du demandeur, l'état du compte de taxation téléphonique de son abonnement, au moment où va être établie la liaison correspondant au numéro demandé. Le point de commande de service réseau 14 envoie cet état dans un champ de signalisation d'usager à usager d'un message noté GENERATE SIGNAL, au centre d'accès au service 12. Ce dernier le retransmet au centre à autonomie d'acheminement 10 dans un message noté ACM. Le centre à autonomie d'acheminement 10 le retransmet à la station fixe B1 dans un message noté ALERTE. La station fixe B1 le retransmet au téléphone T1 par la voie radio. Le débit est affiché sur l'afficheur 20 du téléphone T1.

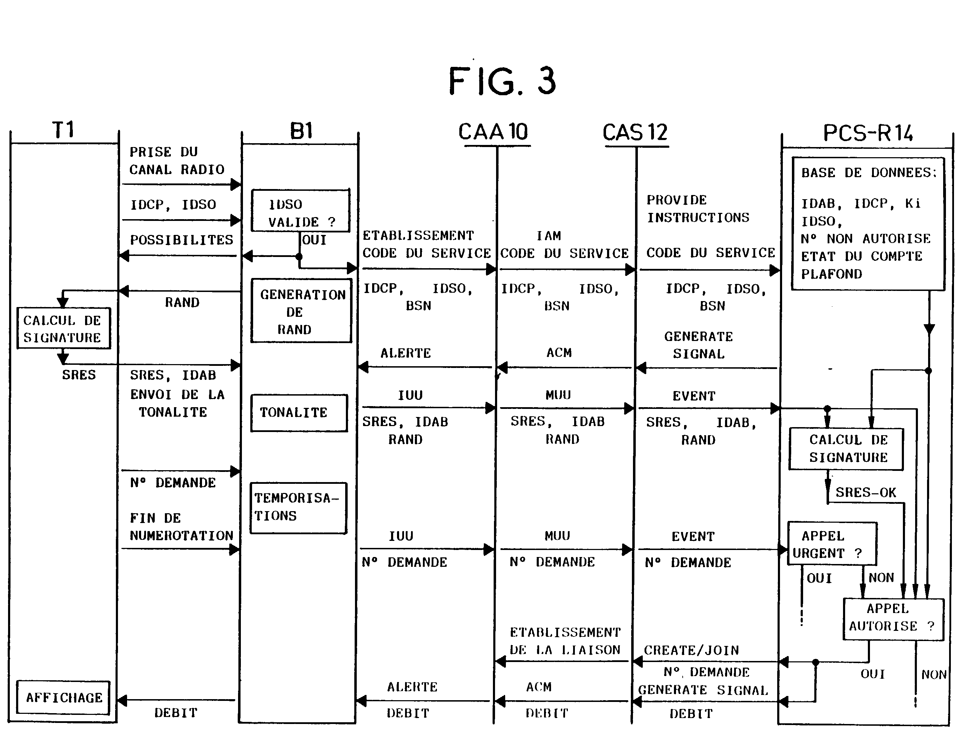

La figure 3 représente un diagramme temporel illustrant une variante de mise en oeuvre du procédé selon l'invention, différente de la mise en oeuvre décrite ci-dessus par le fait que la génération du nombre aléatoire RAND est réalisée dans la station fixe desservant le demandeur, le nombre RAND aléatoire étant transmis de la station fixe B1 au point de commande de service réseau 14, pour y calculer la signature de référence. Les messages GENERATE SIGNAL, ACM, ALERTE, reçus en retour par la station fixe B1, ne transmettent plus le nombre aléatoire RAND; ils ont pour seule fonction de transmettre l'ordre déclenchant l'envoi de la tonalité par la station fixe B1. Par contre, les messages IUU, MUU, et EVENT transmettent de la station fixe B1 au point de contrôle de service réseau 14, le nombre aléatoire RAND en plus de la signature SRES, et du mot IDAB identifiant l'abonné.

Les vérifications réalisées par le point de commande de service 14 sont inchangées, ainsi que la transmission de l'état du compte de l'abonné.

## Revendications

1. Procédé d'accès à un service de téléphonie sans fil, ce service étant assuré par un réseau comportant :
- un réseau de distribution (1) constitué par des stations fixes (B1,...,Bp) et des téléphones numériques (T1,...Tn), sans fil, reliés par radio aux stations fixes;
- un réseau public commuté (2), numérique, à intégration de services, chaque station fixe lui étant reliée par des accès normalisés comportant notamment un canal de signalisation d'usager à usager (D);
- des points de commande de service réseau (14, 15), reliés au réseau commuté (2) et comportant chacun une base de données d'abonnés au service de téléphonie sans fil, et un dispositif logique de traitement d'appels;
- un point de commande de service gestion (16) comportant une base de données de référence;
caractérisé en ce qu'il consiste à échanger des informations entre une station fixe (B1,..,Bp) et un point de commande de service (14, 15, 16), en vue de déterminer le droit d'accès d'un demandeur, par le canal de signalisation d'usager à usager (D) de l'accès normalisé reliant la station fixe au réseau public commuté (2).

2. Procédé selon la revendication 1, caractérisé en ce que pour authentifier un demandeur, il consiste à :
- stocker et tenir à jour, dans les bases de données des points de commande de service (14, 15, 16), des mots (IDAB,IDCP) identifiant chaque abonnement et le téléphone correspondant, et une clé secrète (Ki) associée à cet abonnement, et propre à un abonné;
- transmettre du téléphone (T1) du demandeur, au point de commande de service réseau (14) desservant ce demandeur, par le canal de signalisation d'usager à usager, des mots (IDAB, IDCP) identifiant l'abonnement et le téléphone du demandeur;
- déterminer, dans le téléphone (T1) du demandeur, une première signature (SRES) en fonction la clé secrète (Ki), propre au demandeur, et d'un nombre aléatoire (RAND), par un algorithme prédéterminé;
- transmettre la première signature au dit point de commande de service réseau (14), par le canal de signalisation d'usager à usager;
- déterminer dans ledit point de commande de service réseau (14), une seconde signature (SRES-OK) en fonction de la clé secrète (Ki) associée à l'abonnement du demandeur, et en fonction du dit nombre aléatoire (RAND), par ledit algorithme prédéterminé;
- vérifier, dans ledit point de commande de service réseau (14), que :
-- la première et la seconde signature (SRES, SRES-OK) sont identiques;
-- que le mot (IDAB) identifiant l'abonnement du demandeur correspond à un abonnement valide;
-- que le mot (IDAB) identifiant l'abonnement du demandeur correspond au mot (IBCP) identifiant le téléphone du demandeur.

3. Procédé selon la revendication 1, caractérisé en ce que pour autoriser l'accès à un numéro demandé il consiste, en outre, à stocker et tenir à jour, dans les bases de données des points de commande (14, 15, 16), pour chaque abonnement, les caractéristiques des numéros qui sont autorisés par cet abonnement;
et consiste, lors de chaque demande d'accès, à :
- vérifier si le numéro demandé est un numéro d'urgence;
- vérifier si le numéro demandé est autorisé par l'abonnement du demandeur, dans le cas où ce n'est pas un numéro d'urgence.

4. Procédé selon la revendication 1, caractérisé en ce que, pour autoriser l'accès à un numéro demandé; il consiste, en outre, à :
- stocker et tenir à jour, dans les bases de données des points de commande de service (14, 15, 16), pour chaque abonnement, l'état du compte de taxation téléphonique de cet abonnement, et un plafond prédéterminé de débit maximal autorisé sur le compte de cet abonnement;
- vérifier si le numéro demandé est un numéro d'urgence;
- vérifier, dans ledit point de commande de service réseau (14), que l'état du compte de l'abonnement du demandeur n'a pas atteint son plafond, dans le cas où le numéro demandé n'est pas un numéro d'urgence.

5. Procédé selon la revendication 4, caractérisé en ce qu'il consiste en outre, à :
- envoyer, du point de commande de service réseau (14) desservant le demandeur, vers le téléphone (T1) du demandeur, un message indiquant l'état du compte de taxation téléphonique de son abonnement, au moment où il demande à accèder au service;
- afficher cet état sur un afficheur (20) intégré au téléphone (T1) du demandeur.

6. Procédé selon la revendication 2, caractérisé en ce que pour déterminer la première et la seconde signature (SRES, SRES-OK), il consiste à produire le dit nombre aléatoire (RAND) dans le point de commande de service réseau (14) et à le transmettre au téléphone (T1) du demandeur, via le canal de signalisation d'usager à usager.

7. Procédé selon la revendication 2, caractérisé en ce que, pour déterminer la première et la seconde signature (SRES, SRES-OK), il consiste à produire le dit nombre aléatoire (RAND) dans la station service (B1) desservant le demandeur; et à le transmettre audit point de commande de service réseau (14) par le canal de signalisation d'usager à usager.

## Patentansprüche

1. Zugangsverfahren zu einem Mobiltelefondienst, der von einem Netz gewährleistet wird,
- mit einem Verteilnetz (1) bestehend aus Feststationen (B1, ... Bp) und digitalen Mobiltelefonen (T1, ... Tn), die mit den Feststationen über Funk verbunden sind,
- mit einem öffentlichen digitalen drahtgebundenen Netz (2) mit integrierten Diensten, an das jede Feststation über Standard-Zugänge angeschlossen ist, die insbesondere einen Signalisationskanal von Benutzer zu Benutzer (D) enthalten,
- mit Netzdienststeuerpunkten (14, 15), die an das öffentliche Netz (2) angeschlossen sind und je eine Datenbasis von Teilnehmern des Mobiltelefondienstes sowie eine logische Vorrichtung zur Bearbeitung von Anrufen enthält,
- mit einem Verwaltungsdienststeuerpunkt (16), der eine Bezugsdatenbasis enthält,
dadurch gekennzeichnet, daß das Verfahren darin besteht, Informationen zwischen einer Feststation (B1, ... Bp) und einem Dienststeuerpunkt (14, 15, 16) auszutauschen, um das Zugangsrecht eines Anrufers über den Signalisationskanal (D) von Benutzer zu Benutzer des Standard-Zugangs zu bestimmen, der die Feststation mit dem öffentlichen drahtgebundenen Vermittlungsnetz (2) verbindet.

2. Verfahren nach Anspruch 1, dadurch gekennzeichnet, daß zur Identifizierung eines Anrufers das Verfahren darin besteht,
- in den Datenbasen der Dienststeuerpunkte (14, 15, 16) jeden Teilnehmervertrag und das entsprechende Telefon identifizierende Wörter (IDAB, IDCP) und einen Geheimschlüssel (Ki) zu speichern und zu aktualisieren, der diesem Teilnehmervertrag zugeordnet ist und für einen Teilnehmer spezifisch ist,
- vom Telefon (T1) des Anrufers an den Netzdienststeuerpunkt (14), der diesen Anrufer bedient, über den Signalisationskanal von Benutzer zu Benutzer Wörter (IDAB, IDCP) zu übertragen, die den Teilnehmervertrag und das Telefon des Anrufers identifizieren,
- im Telefon (T1) des Anrufers abhängig vom Geheimschlüssel (Ki), der für den Anrufer spezifisch ist, und von einer Zufallszahl (RAND) über einen vorgegebenen Algorithmus eine erste Signatur (SRES) zu bestimmen,
- die erste Signatur an den Netzdienststeuerpunkt (14) über den Signalisationskanal von Benutzer zu Benutzer zu übertragen,
- im Netzdienststeuerpunkt (14) abhängig vom Geheimschlüssel (Ki) entsprechend dem Vertrag dieses Anrufers und abhängig von der Zufallszahl (RAND) durch den vorgegebenen Algorithmus eine zweite Signatur (SRES-OK) zu bestimmen,
- im Netzdienststeuerpunkt (14) zu überprüfen,
-- ob die erste und die zweite Signatur (SRES, SRES-OK) einander gleichen,
-- ob das den Teilnehmervertrag des Anrufers identifizierende Wort (IDAB) einem gültigen Vertrag entspricht,
-- ob das den Teilnehmervertrag des rufenden Teilnehmers identifizierende Wort (IDAB) dem Wort (IBCP) entspricht, das das Telefon des Anrufers identifiziert.

3. Verfahren nach Anspruch 1, dadurch gekennzeichnet, daß zur Freigabe des Zugangs zu einer gewählten Nummer das Verfahren darin besteht, in den Datenbasen der Steuerpunkte (14, 15, 16) für jeden Teilnehmervertrag die Merkmale der für diesen Vertrag freigegebenen Nummern zu speichern und zu aktualisieren, und bei einem Zugriffswunsch
- zu überprüfen, ob die gewählte Nummer eine Notrufnummer ist,
- zu überprüfen, ob die gewählte Nummer aufgrund des Vertrags des Anrufers genehmigt ist, sofern es sich nicht um eine Notrufnummer handelt.

4. Verfahren nach Anspruch 1, dadurch gekennzeichnet, daß das Verfahren zur Freigabe des Zugangs zu einer gewählten Nummer außerdem darin besteht,
- in den Datenbasen der Dienststeuerpunkte (14, 15, 16) für jeden Teilnehmervertrag den Telefongebührenkontostand dieses Vertrags und eine vorbestimmte Obergrenze der maximal zulässigen Belastung des Kontos dieses Vertrags zu speichern und zu aktualisieren,
- zu überprüfen, ob die Nummer eine Notrufnummer ist,
- im Netzdienststeuerpunkt (14) zu überprüfen, ob der Gebührenkontostand des Teilnehmervertrags des Anrufers nicht seine Obergrenze erreicht hat, sofern die gewünschte Nummer keine Notrufnummer ist.

5. Verfahren nach Anspruch 4, dadurch gekennzeichnet, daß es weiter darin besteht,
- von dem den Anrufer bedienenden Netzdienststeuerpunkt (14) an das Telefon (T1) des Anrufers eine Nachricht zu übermitteln, die den Telefongebührenkontostand seines Vertrags in dem Zeitpunkt angibt, in dem er Zugang zu dem Dienst verlangt, - diesen Kontostand auf einem in das Telefon (T1) des Anrufers integrierten Anzeigefeld (20) anzuzeigen.

6. Verfahren nach Anspruch 2, dadurch gekennzeichnet, daß das Verfahren zur Bestimmung der ersten und der zweiten Signatur (SRES, SRES-OK) darin besteht, die Zufallszahl im Netzdienststeuerpunkt (14) zu erzeugen und an das Telefon (T1) des Anrufers über den Signalisationskanal von Benutzer zu Benutzer zu übertragen.

7. Verfahren nach Anspruch 2, dadurch gekennzeichnet, daß es bei der Bestimmung der ersten und der zweiten Signatur (SRES, SRES-OK) darin besteht, die Zufallszahl (RAND) in der den Anrufer bedienenden Feststation (B1) zu erzeugen und an den Netzdienststeuerpunkt (14) über den Signalisationskanal von Benutzer an Benutzer zu übermitteln.

## Claims

1. Wireless telephone service access method for a service provided by a network comprising:
- a distribution network (1) comprising fixed stations (B1, ..., Bp) and wireless digital telephones (T1, ..., Tn) linked by radio to the fixed stations;
- an integrated services digital public switched telephone network (2) to which each fixed station is connected by standard ports including a user to user signalling channel (D);
- service control points (14, 15) connected to the public switched telephone network (2) and each including a wireless telephone service subscriber database and a call processing logic device;
- a service management system (16) including a reference database;
- characterised in that it consists in exchanging information between a fixed station (B1, ..., Bp) and a service control point or said service management system (14, 15, 16) to determine the right of access of a caller to the user to user signalling channel (D) of the standard port connecting the fixed station to the public switched telephone network (2).

2. Method according to claim 1 characterised in that, to authenticate the caller, it consists in:
- storing and keeping up to date in the service control point (14, 15, 16) databases words (IDAB, IDCP) identifying each subscription and the corresponding telephone and a secret key (Ki) associated with said subscription and specific to only one subscriber;
- transmitting from the caller's telephone (T1) to the service control point (14) serving the caller over the user to user signalling channel words (IDAB, IDCP) identifying the caller's subscription and telephone;
- determining in the caller's telephone (T1) a first signature (SRES) using the secret key (Ki) known only to the caller and a random number (RAND), by means of a predetermined algorithm;
- transmitting the first signature to said service control point (14) over the user to user signalling channel;
- determining in said service control point (14) a second signature (SRES-OK) using the secret key (Ki) associated with the caller's subscription and said random number (RAND) by means of said predetermined algorithm;
- verifying in said service control point (14) that:
-- the first and second signatures (SRES, SRES-OK) are identical;
-- the word (IDAB) identifying the caller's subscription represents a valid subscription; and
-- the word (IDAB) identifying the caller's subscription matches the word (IDCP) identifying the caller's telephone.

3. Method according to claim 1 characterised in that, to authorise access to a called party number, it consists in storing and keeping up to date in the service control point and service management system (14, 15, 16) databases, for each subscription, data on the numbers authorised by said subscription and, for each access request:
- verifying whether the called party number is an emergency service number; and
- verifying if the called party number is authorised by the caller's subscription if it is not an emergency service number.

4. Method according to claim 1 characterised in that, to authorise access to a called party number, it further consists in:
- storing and keeping up to date in the service control point and service management system (14, 15, 16) databases, for each subscription, the subscription telephone charging account status and a predetermined maximum debit or ceiling authorised for the account of said subscription;
- verifying if the called party number is an emergency service number; and
- verifying in said service control point (14) whether the caller's subscription account status has reached said ceiling if the called party number is not an emergency service number.

5. Method according to claim 4 characterised in that it further consists in:
- sending from the service control point (14) servicing the caller to the telephone (T1) of the caller a message indicating his subscription telephone charging account status at the time access to the service is requested; and
- displaying this status on a display (20) on the caller's telephone (T1).

6. Method according to claim 2 characterised in that, to determine the first and second signatures (SRES, SRES-OK), said random number (RAND) is generated in the service control point (14) and transmitted to the caller's telephone (T1) via the user to user signalling channel.

7. Method according to claim 2 characterised in that, to determine the first and second signatures (SRES, SRES-OK), said random number (RAND) is generated in the fixed station (B1) servicing the caller and transmitted to said service control point (14) via the user to user signalling channel.
